# EUROPEAN PATENT SPECIFICATION

(11) **EP 3 958 047 B1**
(45) Date of publication and mention of the grant of the patent: **04.03.2026**
(21) Application number: 20791488.8
(22) Date of filing: 17.04.2020
(51) Int. Cl.: G02C 7/10, C08G 18/06, C08G 18/38, G02B 5/22, C08G 18/24, C08G 18/75, G02B 1/04

(54) **OPTICAL MATERIAL**
OPTISCHES MATERIAL
MATÉRIAU OPTIQUE

(30) Priority: 19.04.2019 JP 2019079856
(43) Date of publication of application: 23.02.2022
(73) Proprietor: Mitsui Chemicals, Inc., Tokyo 104-0028 (JP); Itoh Optical Industrial Co., Ltd., Aichi 443-0041 (JP)
(72) Inventor: MATSUI, Yusuke, Omuta-shi, Fukuoka 836-8610 (JP); ITO, Shinsuke, Omuta-shi, Fukuoka 836-8610 (JP); ODA, Hirofumi, Gamagori-city, Aichi 4430041 (JP)
(74) Representative: Mewburn Ellis LLP
(86) International application number: PCT/JP2020/016890
(87) International publication number: WO 2020/213717

(56) References cited:
- EP-A1- 2 618 206
- EP-A1- 2 921 511
- EP-A1- 3 333 207
- WO-A2-2014/011581
- CN-A- 102 830 506
- JP-A- 2003 084 242
- JP-A- 2012 058 643
- JP-A- 2012 123 236
- JP-A- 2018 087 868
- JP-A- H07 306 387
- TW-B- I 633 201
- US-A1- 2018 284 486
- ANONYMOUS: "Spectrophotometer CM-5 Instruction Manual", 1 January 2009 (2009-01-01), XP093008713, Retrieved from the Internet <URL:https://www.konicaminolta.com/instruments/download/instruction_manual/color/pdf/cm-5_instruction_eng.pdf> [retrieved on 20221215]

## Description

### Technical Field

The present disclosure relates to an optical material cutting light of a specific wavelength.

### Background Art

Since a plastic lens is lighter than an inorganic lens, is not easily broken, and can be dyeable, the plastic lens has become rapidly widespread as an optical material such as a spectacle lens or a camera lens.

In recent years, a spectacle lens capable of reducing the influence on the eye by suppressing transmission of light of a specific wavelength has been developed.

Patent Document 1 discloses a device having an optical filter that blocks light in a wavelength range including 420 nm in order to maintain circadian rhythm. However, the effect on migraine and the hue acceptable in appearance are not disclosed. Patent Document 2 discloses a light-shielding lens which can cut UV or visible radiation having wavelengths of 500 nm or shorter to protect the user's eyes from harmful radiation. Patent Document 3 discloses an ophthalmic lens for clip-on frames that contain pigments or dyes for preservation of color perception in combination with prescription lenses. Patent Document 4 discloses a polymerizable composition for the suppression of striae containing an alicyclic isocyanate compound, a thiol compound, and an imidazole-based curing catalyst. Patent Document 5 discloses a polymerizable composition for improving impact-resistance including a thiol, a tin compound and an isocyanate compound in which the optical material obtained from said composition has a haze value of 0.05 or less.

Patent Document 1: Japanese National-Phase Publication No. 2010-535538. Patent Document 2: European Patent Application Publication No. EP 2618206 A1. Patent Document 3: United States Patent Application Publication No. US 2018/0284486 A1. Patent Document 4: European Patent Application Publication No. EP 2921511 A1. Patent Document 5: European Patent Application Publication No. EP 3333207 A1.

### SUMMARY OF INVENTION

### Technical Problem

As photoreceptors, rods, cones (S cone, M cone, and L cone), and an intrinsically photosensitive retinal ganglion cells (ipRGC) are present on the retina of mammals. As one of the symptoms of migraine, there are many cases of having a symptom of photosensitivity that a person feels sensitive to light at the time of a headache, but it is suggested that a photoreceptor of the eye may be involved in photosensitivity of migraine.

Since the S cone strongly reacts to blue component light near a wavelength range of 420 nm, an effect of preventing and reducing migraine of a user is expected by using eyewear such as glasses or sunglasses including a lens having a low transmittance of blue component light near a wavelength range of 420 nm.

Furthermore, since a patient with migraine having a symptom of photosensitivity may easily feel glare, there is also a need for a lens having a natural hue that is acceptable in appearance while having a predetermined luminous transmittance (light-shielding property). Solution to Problem

As a result of conducting intensive studies, the present inventors found that, by setting a transmittance curve and a luminous transmittance within predetermined ranges, migraine caused by photosensitivity can be reduced and a lens having a natural hue can be provided, thereby completing the disclosure.

In a first aspect of the invention there is provided an optical material in which a transmittance curve satisfies the following characteristics (1) to (4), and a luminous transmittance satisfies the following characteristic (5), the transmittance curve and the luminous transmittance being measured at a thickness of 2 mm:
(1) a maximum transmittance at a wavelength of from 410 nm to 450 nm is from 20% to 65%,
(2) a transmittance increases substantially in proportion to a wavelength at a wavelength of from 450 nm to 700 nm
(3) a transmittance at the wavelength of 450 nm is 50% or more,
(4) a transmittance at the wavelength of 700 nm is 95% or more, and
(5) the luminous transmittance is from 70% to 85%.
In one embodiment, the optical material has an average transmittance in a wavelength band of from 410 nm to 450 nm measured at a thickness of 2 mm from 35% to 65%.
In one embodiment, the optical material has a transmittance at a wavelength of 399 nm or less is 1% or less.
In one embodiment, the optical material has an average transmittance in a wavelength band of from 680 nm to 800 nm is 90% or more.
In one embodiment, the optical material has a transmittance at a wavelength of from 680 nm to 800 nm is 90% or more.
In one embodiment, the optical material has an average transmittance in a wavelength band of from 450 nm to 700 nm is from 70% to 85%.
In one embodiment, the optical material is colored by at least one dye.
In one embodiment, the optical contains a resin formed of:
a constituent component derived from an isocyanate compound (A); and
a constituent component derived from at least one active hydrogen compound (B) selected from the group consisting of a polythiol compound having two or more mercapto groups, a hydroxythiol compound having one or more mercapto groups and one or more hydroxyl groups, a polyol compound having two or more hydroxyl groups, and an amine compound.
In one embodiment, the isocyanate compound (A) includes at least one selected from an aliphatic isocyanate compound, an alicyclic isocyanate compound, an aromatic isocyanate compound, a heterocyclic isocyanate compound, or an aromatic aliphatic isocyanate compound. In one embodiment, the isocyanate compound (A) is at least one selected from the group consisting of xylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, hexamethylene diisocyanate, pentamethylene diisocyanate, bis(isocyanatomethyl)cyclohexane, and dicyclohexylmethane diisocyanate.
In one embodiment, the the polythiol compound is at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

### Advantageous Effects of Invention

According to one embodiment of the disclosure, it is possible to reduce migraine caused by photosensitivity and to provide an optical material having a natural hue.

### BRIEF DESCRIPTION OF DRAWINGS

Fig. 1 illustrates a transmittance curve of a plano lens obtained in Example 1.
Fig. 2 illustrates a transmittance curve of a plano lens obtained in Example 2.

### DESCRIPTION OF EMBODIMENTS

Herein, each numerical range specified using "(from)... to..." represents a range including the numerical values noted before and after "to" as the lower limit value and the upper limit value, respectively.

Herein, the amount of each component in a composition means the total amount of the plurality of substances present in the composition, unless otherwise specified, when there is more than one substance corresponding to each component in the composition.

With regard to the stepwise numerical ranges described herein, the upper limit value or the lower limit value described in one numerical range may be replaced with the upper limit value or the lower limit value of another stepwise numerical range. In the numerical ranges described herein, upper limit values or lower limit values of the numerical value ranges may be replaced with values described in Examples.

An optical material of the disclosure is described in detail with reference to embodiments.

In the optical material of the present invention, a transmittance curve measured at a thickness of 2 mm satisfies the following characteristics (1) to (4), and a luminous transmittance measured at the thickness of 2 mm satisfies the following characteristic (5).
(1) A maximum transmittance at a wavelength of from 410 nm to 450 nm, and preferably from 410 nm to 430 nm is from 20% to 65%, and preferably from 30% to 60%.
(2) a transmittance increases substantially in proportion to a wavelength at a wavelength of from 450 nm to 700 nm.
(3) a transmittance at the wavelength of 450 nm is 50% or more.
(4) a transmittance at the wavelength of 700 nm is 95% or more.
(5) The luminous transmittance is from 70% to 85%, and preferably from 70% to 80%.

In the optical material of the present embodiment, when the transmittance curve and the luminous transmittance satisfy the above characteristics, migraine caused by photosensitivity can be reduced, and the optical material can have a natural hue.

In the optical material of the present embodiment, an average transmittance in a wavelength band of from 410 nm to 450 nm, and preferably from 410 nm to 430 nm, is preferably from 35% to 65%, and more preferably from 40% to 55%, from the viewpoint of the effects in the disclosure.

In the optical material of the present embodiment, a transmittance at a wavelength of 399 nm or less is preferably 1% or less, from the viewpoint of the effects in the disclosure.

The "transmittance at the wavelength of 399 nm or less" means each of the transmittances in the entire wavelength range of 399 nm or less. That is, the "transmittance at the wavelength of 399 nm or less is 1% or less" means that a transmittance in the entire wavelength range of 399 nm or less is 1% or less.

In the optical material of the present embodiment, an average transmittance in a wavelength band of from 680 nm to 800 nm, and preferably from 700 nm to 780 nm, is preferably 90% or more, from the viewpoint of the effects in the disclosure.

In addition, a transmittance at a wavelength of from 680 nm to 800 nm, and preferably from 700 nm to 780 nm, is preferably 90% or more, and more preferably 93% or more.

As described above, the "transmittance at the wavelength of from 680 nm to 800 nm, and preferably from 700 nm to 780 nm" means each of the transmittances in the entire wavelength range of from 680 nm to 800 nm, and preferably from 700 nm to 780 nm.

In the optical material of the present embodiment, the transmittance increases substantially in proportion to a wavelength at a wavelength of from 450 nm to 700 nm, and a transmittance at the wavelength of 450 nm is preferably 50% or more, and a transmittance at the wavelength of 700 nm is preferably 95% or more, from the viewpoint of the effects in the disclosure.

A transmittance increases substantially in proportion to a wavelength at a wavelength of from 500 nm to 680 nm, and a transmittance at the wavelength of 500 nm is preferably 60% or more, and a transmittance at the wavelength of 680 nm is preferably 92% or more.

In the optical material of the present embodiment, an average transmittance in a wavelength band of from 450 nm to 700 nm is preferably from 70% to 85%, and more preferably from 70% to 80%, from the viewpoint of the effects in the disclosure.

The optical material of the present embodiment preferably contains at least one dye, such that blue component light near a wavelength range of 420 nm can be cut, thereby reducing migraine caused by photosensitivity and providing an optical material having a natural hue.

A method of obtaining the optical material of the present embodiment is not particularly limited as long as blue component light near a wavelength range of 420 nm is cut and the optical material has a natural hue, and examples thereof include a method of coating a composition containing a dye, a method of kneading a dye into a resin composition and obtaining an optical material formed of the composition, and a method of dying an optical material.

The dye can be selected from known dyes that can be used for an optical material as long as the effects in the disclosure can be obtained. Examples of the dye used in the coating method, the kneading method, or the dying method include Dianix series (manufactured by Dystar Japan Ltd.), Sumikaron series (manufactured by Sumitomo Chemical Co., Ltd.), Kayalon series (manufactured by Nippon Kayaku Co., Ltd.), and a color tone adjusting agent. These dyes can be used singly, or in combination of two or more kinds thereof.

Examples of the color tone adjusting agent include an anthraquinone-based dye, a perinone-based dye, a monoazo-based dye, a diazo-based dye, and a phthalocyanine-based dye. The color tone adjusting agents may be used singly, or in combination of two or more kinds thereof.

Examples of the anthraquinone-based dye include Solvent Blue 36 (1,4-bis(isopropylamino)anthracene-9,10-dione), Solvent Blue 63 (1-(methylamino)-4-(m-tolylamino)anthracene-9,10-dione), Solvent Blue 94 (1-amino-2-bromo-4-(phenylamino)anthracene-9,10-dione), Solvent Blue 97 (1,4-bis((2,6-diethyl-4-methylphenyl)amino)anthracene-9,10-dione), Solvent Blue 104 (1,4-bis(mesitylamino)anthracene-9,10-dione), Solvent Violet 13 (1-hydroxy-4-(p-tolylamino)anthracene-9,10-dione), Solvent Violet 13 (1,5-bis(p-tolylamino)anthracene-9,10-dione), Solvent Red 52 (3-methyl-6-(p-tolylamino)-3H-naphtho[1,2,3-de]quinoline-2,7-dione), Solvent Red 168 or Plast Red 8320 (1-(cyclohexylamino)anthracene-9,10-dione), Solvent Red 207 (1,5-bis(cyclohexylamino)anthracene-9,10-dione), Disperse Red 22 (1-(phenylamino) anthracene-9,10-dione), Disperse Red 60 (1-amino-4-hydroxy-2-phenoxy anthracene-9,10-dione), Solvent Violet 59 (1,4-diamino-2,3-diphenylanthracene-9,10-dione), Solvent Green 28 (1,4-bis((4-butylphenyl)amino)-5,8-dihydroxyanthracene-9,10-dione), and Plast Blue 8514 (1-hydroxy-4-[(4-metylphenyl)amino]-9,10-anthracene dione).

Examples of the perinone-based dye include Solvent Orange 60 (12H-isoindolo[2,1-a]perimidin-12-one), Solvent Orange 78, Solvent Orange 90, Solvent Red 135 (8,9,10,11-tetrachloro-12H-isoindolo[2,1-a]perimidin-12-one), Solvent Red 162, and Solvent Red 179 (14H-benzo[4,5]isoquinolino[2,1-a]perimidin-14-one).

Examples of the monoazo-based dye include Solvent Red 195, Fast Orange R, Oil Red, and Oil Yellow.

Examples of the diazo-based dye include Chicago Sky Blue 6B (sodium 6,6'-((1E,1'E)-(3,3'-dimethoxy-[1,1'-biphenyl]-4,4'-diyl)bis(diazene-2,1-diyl))bis(4-amino-5-hydroxynaphthalene-1,3-disulfonate)), Evans Blue (sodium 6,6/-((1E,1'E)-(3,3/-dimethyl-[1,1'-biphenyl]-4,4'-diyl)bis(diazene-2,1-diyl))bis(4-amino-5-hydroxynaphthalene-1,3-disulfonate)), Direct Blue 15 (sodium 3,3'-((1E,1'E)-(3,3'-dimethoxy-[1,1'-biphenyl]-4,4'-diyl)bis(diazene-2,1-diyl))bis(5-amino-4-hydroxynaphthalene-2,7-disulfonate)), Trypan Blue (sodium 3,3'-((1E,1'E)-(3,3'-dimethyl-[1,1'-biphenyl]-4,4'-diyl)bis(diazene-2,1-diyl))bis(5-amino-4-hydroxynaphthalene-2,7-disulfonate)), Benzopurpurin 4B (sodium 3,3'-((1E,1'E)-(3,3'-dimethyl-[1,1'-biphenyl]-4,4'-diyl)bis(diazene-2,1-diyl))bis(4-aminonaphthalene-1-sulfonate)), and Congo Red (sodium 3,3'-((1E,1'E)-[1,1'-biphenyl]-4,4'-diylbis(diazene-2,1-diyl))bis(4-aminonaphthalene-1-sulfonate)).

Examples of the phthalocyanine-based dye include C.I. Direct Blue 86 and C.I. Direct Blue 199.

In the present embodiment, Solvent Blue 94, Solvent Blue 97, Solvent Blue 104, Solvent Violet 59, Solvent Red 195, Disperse Red 60, Solvent Green 28, Solvent Orange 60, Plast Blue 8514, or Plast Red 8320 is preferable, and Plast Blue 8514 or Plast Red 8320 is more preferable, from the viewpoint of the effects in the disclosure. These color tone adjusting agents may be used singly, or in combination of two or more kinds thereof, and these color tone adjusting agents are preferably used in combination of two or more kinds thereof.

The amount of dye added is adjusted so that the optical material of the present embodiment has a desired hue.

The optical material of the present embodiment preferably further contains a resin.

The resin is not particularly limited as long as the effects in the disclosure can be exhibited, and can be selected from known transparent resins that can be used in the optical material.

Examples of the resin include poly(thio)urethane, poly(thio)urethane urea, polysulfide, polycarbonate, poly(meth)acrylate, and polyolefin, and poly(thio)urethane or poly(thio)urethane urea is preferable. At least one selected from these resins can be used as the resin.

Hereinafter, a composition for optical materials used for preparing an optical material is described. In the present embodiment, a polymerizable composition that is used for preparing an optical material and contains poly(thio)urethane or poly(thio)urethane urea as a resin is described.

### [Polymerizable Composition for Optical Materials]

The polymerizable composition for optical materials used in the present embodiment contains:
an isocyanate compound (A), and
at least one active hydrogen compound (B) selected from the group consisting of a polythiol compound having two or more mercapto groups, a hydroxythiol compound having one or more mercapto groups and one or more hydroxyl groups, a polyol compound having two or more hydroxyl groups, and an amine compound.

In a case where the optical material contains a dye, the polymerizable composition for optical materials may further contain the dye. The amount of dye contained in the polymerizable composition for optical materials is adjusted so that the optical material has a desired hue.

### [Isocyanate Compound (A)]

Examples of the isocyanate compound (A) can include an aliphatic isocyanate compound, an alicyclic isocyanate compound, an aromatic isocyanate compound, a heterocyclic isocyanate compound, and an aromatic aliphatic isocyanate compound, and these isocyanate compounds (A) may be used singly, or in a mixture of two or more kinds thereof. These isocyanate compounds may contain a dimer, a trimer, and a prepolymer.

Examples of these isocyanate compounds include compounds exemplified in WO2011/055540.

In the present embodiment, from the viewpoint of the effects in the disclosure, the isocyanate compound (A) preferably contains at least one selected from the group consisting of xylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, hexamethylene diisocyanate, pentamethylene diisocyanate, bis(isocyanatomethyl)cyclohexane, and dicyclohexylmethane diisocyanate, and
more preferably contains at least one selected from the group consisting of xylene diisocyanate, tolylene diisocyanate, 2,5-bis(isocyanatomethyl)bicyclo-[2.2.1]-heptane, and 2,6-bis(isocyanatomethyl)bicyclo-[2.2.1]-heptane.

### (Active Hydrogen Compound (B))

In the present embodiment, as the active hydrogen compound (B), at least one selected from the group consisting of a polythiol compound having two or more mercapto groups, a hydroxythiol compound having one or more mercapto groups and one or more hydroxyl groups, a polyol compound having two or more hydroxyl groups, and an amine compound can be used.

Examples of these active hydrogen compounds include compounds exemplified in WO2016/125736.

The active hydrogen compound (B) is preferably at least one selected from a polythiol compound having two or more mercapto groups or a hydroxythiol compound having one or more mercapto groups and one or more hydroxyl groups, and more preferably at least one selected from polythiol compounds having two or more mercapto groups, from the viewpoint of the effects in the disclosure.

The polythiol compound is at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate), and
is more preferably at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, and pentaerythritol tetrakis(3-mercaptopropionate).

In the present embodiment, a molar ratio of an active hydrogen group in the active hydrogen compound (B) to an isocyanato group in the isocyanate compound (A) is from 0.8 to 1.2, preferably from 0.85 to 1.15, and more preferably from 0.9 to 1.1. Within the above range, a resin suitably used as an optical material, particularly a plastic lens material for glasses can be obtained.

Examples of an optional additive include a polymerization catalyst, an internal mold release agent, and an ultraviolet absorber. In the present embodiment, when polyurethane and polythiourethane are obtained, a polymerization catalyst may or may not be used.

An example of the internal mold release agent includes an acidic phosphoric acid ester. Examples of the acidic phosphoric acid ester include a phosphoric acid monoester and a phosphoric acid diester, and the acidic phosphoric acid esters can be used singly, or in a mixture of two or more kinds thereof.

Examples of the ultraviolet absorber include a benzophenone ultraviolet absorber, a triazine ultraviolet absorber, and a benzotriazole ultraviolet absorber, and preferably include a benzotriazole ultraviolet absorber such as 2-(2H-benzotriazol-2-yl)-4-tert-octylphenol or 2-(5-chloro-2H-benzotriazol-2-yl)-4-methyl-6-tert-butylphenol. These ultraviolet absorbers may be used singly, or in combination of two or more kinds thereof.

The composition for optical materials can be obtained by mixing the above components by a predetermined method.

The order and method of mixing the components in the composition are not particularly limited as long as the components can be uniformly mixed, and the mixing can be performed by a known method. An example of the known method includes a method of preparing a masterbatch containing a predetermined amount of an additive, and dispersing and dissolving the masterbatch in a solvent. For example, in the case of a polyurethane resin, a method of preparing a masterbatch by dispersing and dissolving an additive in a polyisocyanate compound is used.

A molded body containing a dye can be obtained by a method of mixing and polymerizing compositions for optical materials containing a dye and a resin monomer for optical materials, or a method of curing a composition for optical materials containing a dye and a resin for optical materials.

### <Cured Product>

Using the polymerizable composition for optical materials of the present embodiment, a cured product can be obtained by polymerization, and cured products having various shapes depending on the shape of a mold can be obtained. Examples of the polymerization method include conventionally known methods, and conditions thereof are not particularly limited.

In the present embodiment, a method of producing a cured product is not particularly limited, and an example of a preferable production method includes a casting polymerization method. First, the polymerizable composition for optical materials is injected between molding molds held with a gasket, or a tape. At this time, depending on the physical properties required for a cured product to be obtained, it is preferable to perform a defoaming treatment under reduced pressure or a filtration treatment under pressure or reduced pressure, , if necessary.

Since the polymerization conditions vary depending on the types and use amounts of the components (A) and (B), the type and use amount of the catalyst, and the shape of the mold, the polymerization conditions are not limited, and the polymerization is performed at a temperature of from -50°C to 150°C for from 1 hour to 50 hours. In some cases, it is preferable to maintain or gradually raise the temperature in a temperature range of from 10°C to 150°C, and to cure the composition for from 1 hour to 25 hours.

The cured product of the present embodiment may be subjected to a treatment such as annealing, if necessary. The treatment temperature is usually from 50°C to 150°C, but is preferably from 90°C to 140°C and more preferably from 100°C to 130°C.

In addition, in the present embodiment, the cured product obtained by heating and curing the polymerizable composition for optical materials can be used as, for example, an optical material, and can constitute a part of the optical material. The cured product of the present embodiment is colorless and transparent, has an excellent appearance, and has an excellent effect of blocking blue component light in a wavelength range of about 420 nm. Therefore, migraine can be reduced. The cured product is excellent in various physical properties such as optical properties, for example, a high refractive index, a high Abbe number and heat resistance, and can be used as various optical materials by forming the cured product into a desired shape and including a coating layer to be formed, if necessary, or other members.

### <Optical Material>

The optical material of the present embodiment includes a cured product. Specifically, the optical material of the present embodiment includes a lens substrate, film layer, or coating layer formed of a cured product.

Representative examples of the configuration of the optical material include an optical material composed of a lens substrate, an optical material composed of a lens substrate and a film layer, an optical material composed of a lens substrate and a coating layer, and an optical material composed of a lens substrate, a film layer, and a coating layer.

Specific examples of the optical material of the present embodiment include an optical material composed only of a lens substrate (including a case in which one optical material is obtained by bonding a plurality of lens substrates), an optical material formed by laminating a film layer on at least one surface of a lens substrate, an optical material formed by laminating a coating layer on at least one surface of a lens substrate, an optical material formed by laminating a film layer and a coating layer on at least one surface of a lens substrate, and an optical material formed by sandwiching a film layer between two lens substrates.

In the optical material of the present embodiment, the transmittance curve and the luminous transmittance have the above-described characteristics in the entire optical material.

For example, a molded body (a lens substrate or an optical film) is prepared using a composition for optical materials containing no dye, and then the molded body is immersed in a dispersion liquid obtained by dispersing the dye in water or a solvent to impregnate the molded body with the dye, and the molded body is dried. An optical material can be prepared using the molded body thus obtained.

After the optical material is prepared, the optical material can be impregnated with the dye. In addition, a plastic spectacle lens including a lens substrate, and if necessary, a film layer and a coating layer laminated can be immersed in a dispersion liquid containing a dye to be impregnated with the dye.

The impregnation amount of the dye can be controlled to a desired impregnation amount by the concentration of the dye in the dispersion liquid, the temperature of the dispersion liquid, and the time for immersing the resin composition for optical materials. The higher the concentration, the higher the temperature, and the longer the immersion time, the larger the impregnation amount. When it is desired to precisely control the impregnation amount, the immersion is repeated a plurality of times under the condition of a small impregnation amount.

In the present embodiment, for example, a carrier in which a dye (disperse dye) is blended and a surfactant are added to water heated from 80°C to 95°C, and stirring is performed, thereby preparing a dispersion liquid. A lens can be colored by a method of immersing a lens in the dispersion liquid until a desired concentration is obtained.

As the disperse dye, at least one of Dianix (manufactured Dystar Japan Ltd.), Sumikaron series (manufactured by Sumitomo Chemical Co., Ltd.), or Kayalon series (manufactured by Nippon Kayaku Co., Ltd.) that is described above can be used.

Examples of the carrier include benzyl alcohol, phenethyl alcohol, ethylene glycol monophenyl ether, ethylene glycol monobenzyl ether, and diethylene glycol monobenzyl ether. The dye can be blended with the carrier so that a concentration is about from 0.5% to 10%.

It is also possible to form a dye-containing coating layer on a plastic lens substrate using a coating material containing a dye.

The optical material having such a configuration can be suitably used as a plastic spectacle lens.

For example, in the optical material, when the above-described characteristics are satisfied, an optical material can be obtained without using the polymerizable composition for optical materials of the embodiment described above.

Hereinafter, a plastic lens which is a preferable aspect of the optical material is described in detail.

### [Plastic Lens]

The plastic lens can have the following configurations by way of example.
(1) A plastic lens including a lens substrate obtained from the composition for optical materials containing a dye of the present embodiment
(2) A plastic lens including a film or coating layer obtained from the composition for optical materials containing a dye of the present embodiment, in which the film or coating layer is formed on at least one surface of a lens substrate obtained from a composition for optical materials containing no dye of the present embodiment
(3) A plastic lens in which a lens substrate which is obtained from a composition for optical materials containing no dye of the present embodiment is laminated on both surfaces of a film obtained from the composition for optical materials containing a dye of the present embodiment

In the present embodiment, these plastic lenses can be suitably used.

Hereinafter, each embodiment is described.

### (First Embodiment)

A method of producing a plastic lens including a lens substrate obtained from the composition for optical materials containing a dye of the present embodiment is not particularly limited, and an example of a preferable production method includes a casting polymerization method using a lens casting mold. The lens substrate can be formed of polyurethane, polythiourethane, polyurethane urea, polythiourethane urea, polysulfide, or poly(meth)acrylate, and the composition for optical materials of the present embodiment containing a dye and monomers of these resins (resin monomers for optical materials) can be used.

Specifically, the composition for optical materials is injected into a cavity of a molding mold held with a gasket, or a tape. At this time, depending on the physical properties required for a plastic lens to be obtained, it is preferable to perform a defoaming treatment under reduced pressure or a filtration treatment under pressure or reduced pressure, if necessary.

After the composition is injected, a lens casting mold is heated in a predetermined temperature program in a heatable device such as an oven or water, and the composition is cured and molded. The resin molded body may be subjected to a treatment such as annealing, if necessary.

In the present embodiment, when molding the resin, in addition to the "optional additives", various additives such as a chain extender, a crosslinking agent, a light stabilizer, an antioxidant, an oil-soluble dye, a filler, and an adhesion improver may be added as in the known molding method according to the purpose.

The plastic lens in the present embodiment may include various coating layers formed on the lens substrate obtained from the composition for optical materials of the present embodiment according to its purpose and use. The coating layer can contain a dye. The coating layer containing a dye can be prepared using a coating material (composition) containing a dye, or can be prepared by immersing a plastic lens with a coating layer in a dispersion liquid obtained by dispersing a dye in water or a solvent after forming the coating layer and impregnating the coating layer with the dye.

### (Second Embodiment)

The plastic lens in the present embodiment includes a film or layer obtained from the composition for optical materials containing a dye of the present embodiment, in which the film or layer is formed on at least one surface of a lens substrate. The lens substrate does not contain a dye.

Examples of the method of producing the plastic lens in the present embodiment include a method (2-1) of producing a lens substrate and then bonding a film or sheet obtained from the composition for optical materials containing a dye of the present embodiment to at least one surface of the lens substrate, and a method (2-2) of arranging a film or sheet obtained from the composition for optical materials containing a dye of the present embodiment along one inner wall of a mold in a cavity of a molding mold held by a gasket, a tape, or the like as described below, and then injecting a composition for optical materials containing no dye into the cavity and curing the composition for optical materials.

The film or sheet obtained from the composition for optical materials of the present embodiment used in the method (2-1) is not particularly limited, but pellets of the composition for optical materials obtained by melt-kneading, or impregnation can be obtained by various conventionally known methods, specifically, for example, molding methods such as an injection molding method, a profile extrusion molding method, a coating molding method for a dissimilar molded body, a T-die sheet or film molding method, an inflation film molding method, and a press molding method. The obtained film or sheet contains polycarbonate, or polyolefin.

The lens substrate can be obtained from a known optical resin, and examples of the optical resin include (thio)urethane and polysulfide.

A known method can be used as a method of bonding the film or sheet obtained from the composition for optical materials of the present embodiment to the surface of the lens substrate.

The casting polymerization in the method (2-2) can be performed in the same manner as that of the method of producing the plastic lens in the first embodiment, and an example of the composition used for the casting polymerization includes a composition containing a resin monomer for optical materials (containing no dye).

The plastic lens in the present embodiment may include various coating layers formed on the lens substrate, film, or layer obtained from the composition for optical materials according to its purpose and use. The coating layer can contain a dye as in the plastic lens in the first embodiment.

### (Third Embodiment)

**In** a plastic lens in the present embodiment, a lens substrate that does not contain a dye is laminated on both surfaces of a film obtained from the composition for optical materials containing a dye of the present embodiment.

Examples of the method of producing the plastic lens in the present embodiment include a method (3-1) of producing a lens substrate and bonding the lens substrate to both surfaces of a film or sheet obtained from the composition for optical materials containing a dye of the present embodiment, and a method (3-2) of arranging a film or sheet obtained from the composition for optical materials containing a dye of the present embodiment in a cavity of a molding mold held by a gasket, or a tape in a state of being separated from an inner wall of the mold, and then injecting the composition for optical materials into the cavity and curing the composition for optical materials.

As the film or sheet obtained from the composition for optical materials of the present embodiment and the lens substrate that are used in the method (3-1), the film, sheet, and lens substrate similar to those of the method (2-1) of the plastic lens in the second embodiment can be used.

A known method can be used as a method of bonding the film or sheet obtained from the composition for optical materials of the present embodiment to the surface of the lens substrate.

The method (3-2) can be specifically performed as follows.

**In** the space of the lens casting mold used in the method of producing the plastic lens in the first embodiment, the film or sheet obtained from the composition for optical materials of the present embodiment is arranged so that both surfaces thereof are parallel to the inner surface of the mold on the front side facing the both surfaces.

Next, in the space of the lens casting mold, a composition containing a resin monomer for optical materials (containing no dye) is injected into two void portions between the mold and a polarizing film by predetermined injection means.

After the composition is injected, a lens casting mold is heated in a predetermined temperature program in a heatable device such as an oven or water, and the composition is cured and molded. The resin molded body may be subjected to a treatment such as annealing, if necessary.

The plastic lens in the present embodiment may include various coating layers formed on the lens substrate according to its purpose and use. The coating layer can contain a dye as in the plastic lens in the first embodiment.

### [Plastic Spectacle Lens]

A plastic spectacle lens can be obtained using the plastic lens of the present embodiment. A coating layer may be applied to one surface or both surfaces, if necessary.

Specific examples of the coating layer include a primer layer, a hard coating layer, an anti-reflection layer, an anti-fogging coating layer, an anti-fouling layer, and a water-repellent layer. These coating layers can be used alone, or a plurality of coating layers can be used in a multi-layer manner. **In** a case where the coating layer is applied to both surfaces, the same coating layers or different coating layers may be applied to the both surfaces, respectively.

For each of the coating layers, a dye used in the present embodiment, an infrared absorber for protecting eyes from infrared rays, a light stabilizer or an antioxidant for improving weather resistance of the lens, a dye or a pigment for improving the fashion of the lens, a photochromic dye or a photochromic pigment, an antistatic agent, and other known additives for improving the performance of the lens may be used in combination. For the layer to be coated by coating, various leveling agents for improving coatability may be used.

Although the disclosure has been described based on the present embodiment, various configurations can be adopted as long as the effects of the disclosure are not impaired.

### Examples

Hereinafter, the disclosure is described in more detail with reference to Examples, but the disclosure is not limited thereto. Evaluation methods and materials used in Examples of the disclosure are as follows.

### [Method of Measuring L*, a*, and b*]

L*, a*, and b* in the CIE 1976 (L*, a*, b*) color system were measured in a 2 mm-thick plano lens by measuring a transmittance in a thickness direction using a spectral colorimeter (CM-5, manufactured by Konica Minolta, Inc.).

### [Method of Measuring YI]

A yellow index (YI) of a 2 mm-thick plano lens was measured by measuring a transmittance in a thickness direction using a spectral colorimeter CM-5 manufactured by Konica Minolta, Inc.

### [Method of Measuring Luminous Transmittance and Spectral Transmittance at Wavelength of 420 nm]

A spectral transmittance of a 2 mm-thick plano lens was measured using a spectrophotometer UV-1800 manufactured by Shimadzu Corporation, and a luminous transmittance was determined.

### [Evaluation of Number of Headache Days]

A group of all 19 subjects was divided into a first group of 9 subjects and a second group of 10 subjects, and a wearing test was performed on each group. Specifically, the 9 subjects in the first group lived one month without glasses (stage 1), and then lived one month while wearing the glasses including the lenses obtained in Example (stage 2). Here, during a period of performing the wearing test by the subjects, each of the subjects wore the glasses to be worn at each stage for 3 hours or longer a day without limiting the wearing scene and use according to the daily life of the subject. In addition, in order to reduce exogenous factors and stress caused by the subjects wearing the spectacle glasses, a lightweight and rimless frame was used in any spectacle frame (not illustrated).

Each subject recorded the presence or absence and symptoms of migraine every day in all stages, the results obtained by summing the number of headache days in each stage were compared with each other. In a case where the number of headache days was reduced by 20% or more, it was determined that the use of the lens obtained in Example was effective in reducing migraine.

The 10 subjects in the second group lived one month while wearing glasses including the lenses obtained in Example (stage a), and then lived one month without the glasses (stage b). Also in the wearing test by the subjects in the second group, as in the wearing test by the subjects in the first group, during a period of performing the wearing test, each of the subjects wore the glasses to be worn at each stage for 3 hours or longer a day without limiting the wearing scene and use according to the daily life of the subject. In addition, in order to reduce exogenous factors and stress caused by the subjects wearing the spectacle glasses, a lightweight and rimless frame was used in any spectacle frame (not illustrated).

Each subject recorded the presence or absence and symptoms of migraine every day in all stages, the results obtained by summing the number of headache days in each stage were compared with each other. In a case where the number of headache days was reduced by 20% or more, it was determined that the use of the lens obtained in Example was effective in reducing migraine.

### [Evaluation Index of Reduction in Number of Headache Days]

1: The number of headache days was reduced by 50% or more
2: The number of headache days was reduced by from 20% to 49%
3: The number of headache days was reduced by from 0% to 19%
4: The number of headache days was not reduced

### [Example 1]

A mixed solution was prepared by charging 0.35 parts by mass of dibutyltin (II) dichloride, 1 part by mass of Zelec UN manufactured by Stefan Company, 15 parts by mass of an ultraviolet absorber Tinuvin 329 (manufactured by BASF Japan Ltd.), and 506 parts by mass of a mixture of 2,5-bis(isocyanatomethyl)bicyclo-[2.2.1]-heptane and 2,6-bis(isocyanatomethyl)bicyclo-[2.2.1]-heptane. The mixed solution was stirred at 25°C for 1 hour to be completely dissolved. Thereafter, 255 parts by mass of 4-mercaptomethyl-1,8-dimercapto-3,6-dithiaoctane and 239 parts by mass of pentaerythritol tetrakis(3-mercaptopropionate) were added to the prepared solution, and stirring was performed at 25°C for 30 minutes, thereby obtaining a uniform solution. The solution was defoamed at 400 Pa for 1 hour, filtering was performed by a 1 µm PTFE filter, and then the filtered solution was injected into a 2C plano glass mold having a center thickness of 2 mm and a diameter of 80 mm. The glass mold was heated from 25°C to 120°C over 16 hours. The glass mold was cooled to room temperature, the glass mold was removed, and a plano lens was obtained. The obtained plano lens was further annealed at 120°C for 2 hours.

1 part by mass of Dianix Blue FBL (manufactured by Dystar Japan Ltd.) as a blue dye was added to 1 liter of water heated to 90°C, and 40 parts by mass of benzyl alcohol as a carrier material and 1 part by mass of a surfactant were mixed, thereby preparing a blue dye dispersion liquid. Similarly, a red dye dispersion liquid was prepared by Sumikaron Red E-RPD (manufactured by Sumika Chemtex Co., Ltd.), a yellow dye dispersion liquid was prepared by Dianix Yellow AC-E (manufactured by Dystar Japan Ltd.), and a brown dye dispersion liquid was prepared by Dianix Yellow Brown AM-R (manufactured by Dystar Japan Ltd.). The plano lens was immersed in each of the obtained dye dispersion liquids of the respective colors, and the plano lens was dyed until a desired spectral transmission characteristic was obtained.

Urethane-based primer coating and silicone-based hard coating were sequentially performed by dip coating to form a film on the surface of the dyed plano lens, SiO₂ and ZrO₂ were alternately laminated by a vacuum vapor deposition method to form an anti-reflection film having a five-layer structure, and then, a fluorine-based water-repellent film was formed on the outermost surface.

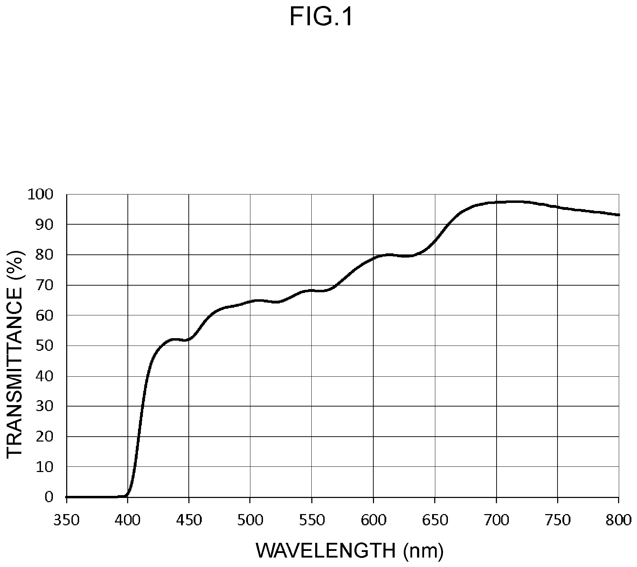

Physical properties of the obtained plano lens were measured. The results are shown in Table-1. The transmittance data are shown in Table-3, and the transmittance curve is illustrated in Fig. 1.

Another plano lens dyed based on the present example was prepared, and glasses including the two plano lenses were prepared. Thereafter, the test sample was subjected to a wearing test by the subjects described above, and evaluation of the effect of reducing the number of headache days was performed in order to verify an effect of reducing migraine. The evaluation results are shown in Table-2.

### [Example 2]

A plano lens was prepared in the same manner as that of Example 1.

1 part by mass of Dianix Blue FBL (manufactured by Dystar Japan Ltd.) as a blue dye was added to 1 liter of water heated to 90°C, and 40 parts by mass of benzyl alcohol as a carrier material and 1 part by mass of a surfactant were mixed, thereby preparing a blue dye dispersion liquid. Similarly, a red dye dispersion liquid was prepared by Sumikaron Red E-RPD (manufactured by Sumika Chemtex Co., Ltd.), a yellow dye dispersion liquid was prepared by Dianix Yellow AC-E (manufactured by Dystar Japan Ltd.), and a brown dye dispersion liquid was prepared by Dianix Yellow Brown AM-R (manufactured by Dystar Japan Ltd.). The plano lens was immersed in each of the obtained dye dispersion liquids of the respective colors, and the plano lens was dyed until a desired spectral transmission characteristic was obtained.

Urethane-based primer coating and silicone-based hard coating were sequentially performed by dip coating to form a film on the surface of the dyed plano lens, SiO₂ and ZrO₂ were alternately laminated by a vacuum vapor deposition method to form an anti-reflection film having a five-layer structure, and then, a fluorine-based water-repellent film was formed on the outermost surface.

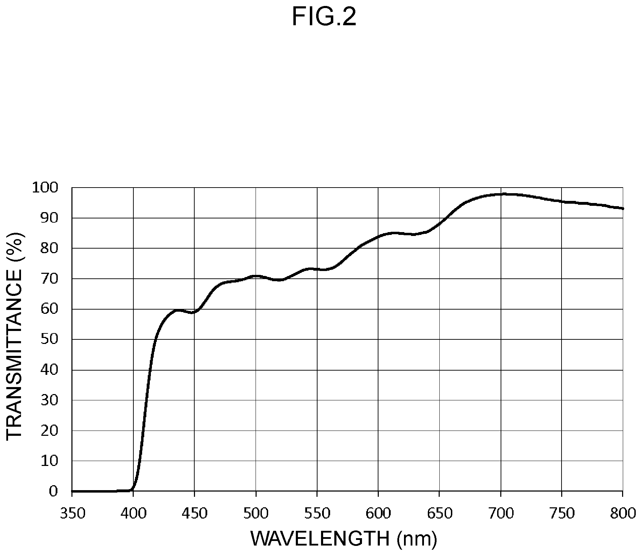

Physical properties of the obtained plano lens were measured. The results are shown in Table-1. The transmittance data are shown in Table-3, and the transmittance curve is illustrated in Fig. 2.

Another plano lens dyed based on the present example was prepared, and glasses including the two plano lenses were prepared. Thereafter, the test sample was subjected to a wearing test by the subjects described above, and evaluation of the effect of reducing the number of headache days was performed in order to verify an effect of reducing migraine. The evaluation results are shown in Table-2.

### [Table 1]

**Table-1**

| | UV transmittance 420 nm (%) | Luminous transmittance (%) | Hue | | | |
|---|---|---|---|---|---|---|
| | | | YI | L* | a* | b* |
| Example 1 | 45.1 | 70.1 | 28.8 | 87.6 | 2.7 | 13.7 |
| Example 2 | 52.0 | 75.4 | 25.3 | 89.7 | 2.9 | 12.0 |

### [Table 2]

**Table-2**

| Subject | | Without glasses | Glasses of Example | | | |
|---|---|---|---|---|---|---|
| No | Age | Number of headache days (A) | Number of headache days (B) | Reduction rate of number of headache days (%) | Type of Example | Effect of reducing headache |
| 1 | 35 | 9 | 3 | 66.7 | 1 | 1 |
| 2 | 39 | 16 | 16 | 0.0 | 2 | 3 |
| 3 | 43 | 13 | 13 | 0.0 | 1 | 3 |
| 4 | 42 | 9 | 4 | 55.6 | 2 | 1 |
| 5 | 33 | 4 | 1 | 75.0 | 1 | 1 |
| 6 | 37 | 8 | 5 | 37.5 | 2 | 2 |
| 7 | 25 | 7 | 5 | 28.6 | 1 | 2 |
| 8 | 37 | 1 | 5 | -400.0 | 2 | 4 |
| 9 | 26 | 10 | 5 | 50.0 | 1 | 1 |
| 10 | 33 | 7 | 8 | -14.3 | 1 | 4 |
| 11 | 38 | 4 | 2 | 50.0 | 2 | 1 |
| 12 | 21 | 10 | 3 | 70.0 | 1 | 1 |
| 13 | 47 | 8 | 10 | -25.0 | 2 | 4 |
| 14 | 48 | 11 | 7 | 36.4 | 1 | 2 |
| 15 | 28 | 7 | 5 | 28.6 | 2 | 2 |
| 16 | 33 | 18 | 8 | 55.6 | 1 | 1 |
| 17 | 38 | 3 | 6 | -100.0 | 2 | 4 |
| 18 | 37 | 14 | 6 | 57.1 | 1 | 1 |
| 19 | 40 | 17 | 9 | 47.1 | 2 | 2 |

As shown in Table-2, when wearing the glasses of Example, the number of headache days was reduced by 50% or more in 8 people corresponding to 42% of the 19 subjects, and the number of headache days was reduced by 20% or more in 13 people corresponding to 68% of the 19 subjects, which showed that the effect of reducing the number of headache days was high.

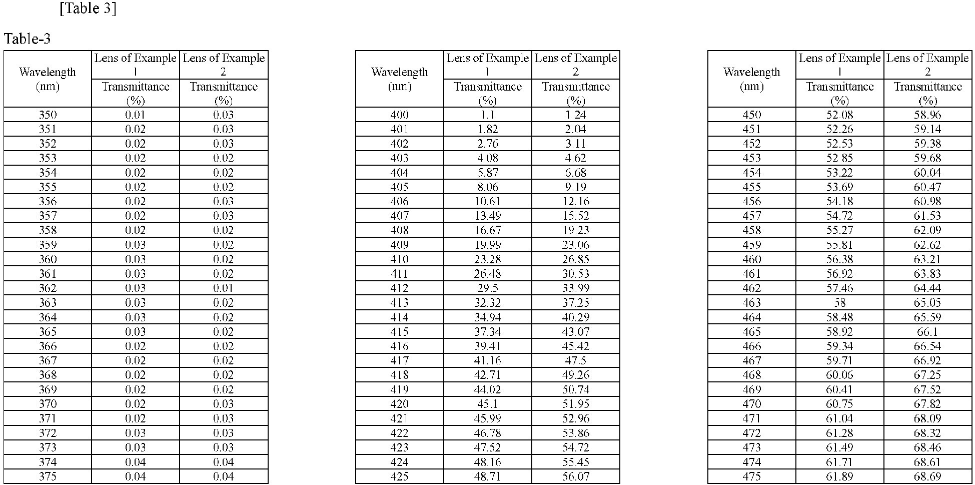

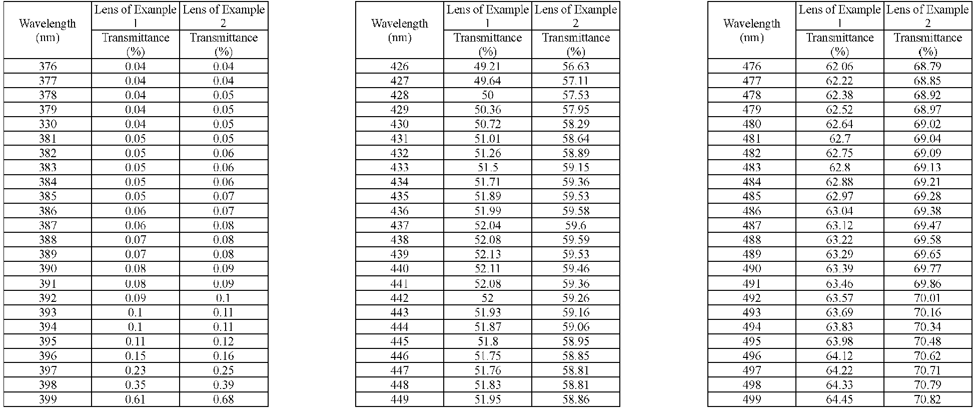

[Table 4]

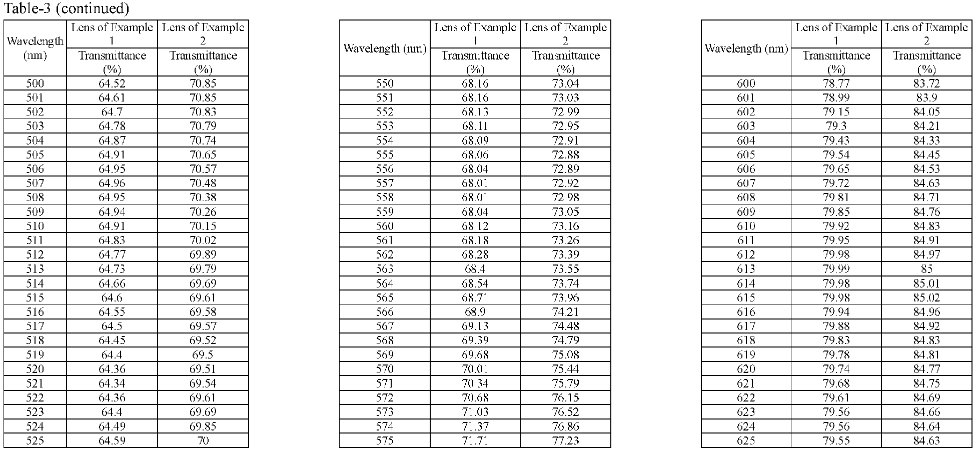

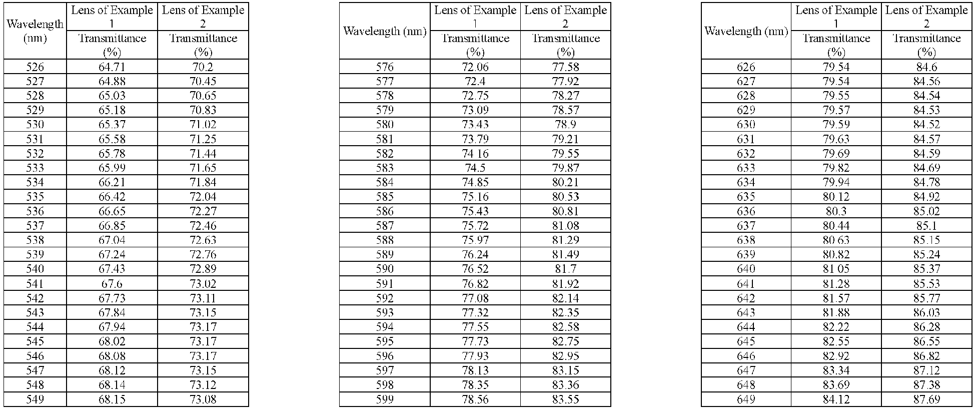

[Table 5]

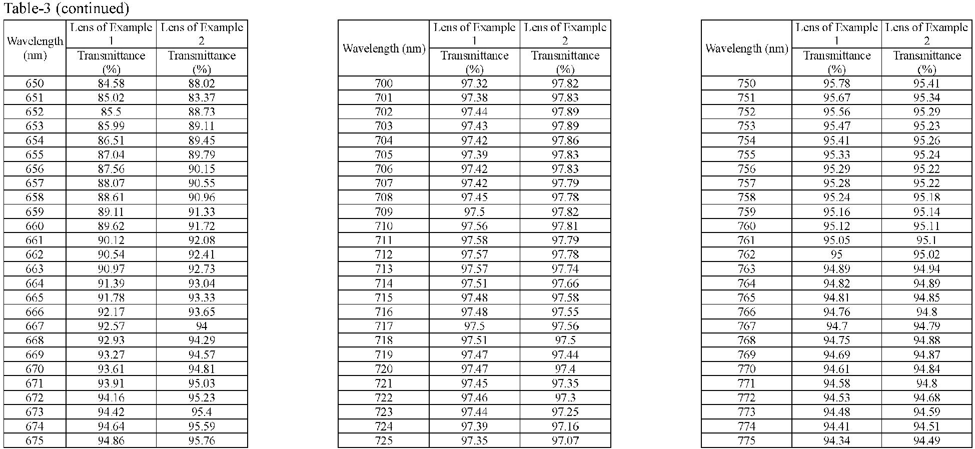

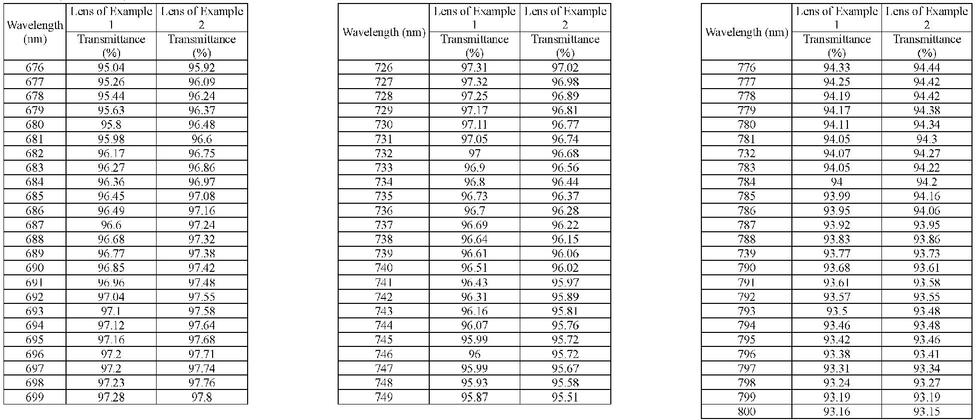

## Claims

1. An optical material in which a transmittance curve satisfies the following characteristics (1) to (4), and a luminous transmittance satisfies the following characteristic (5), the transmittance curve and the luminous transmittance being measured at a thickness of 2 mm:
(1) a maximum transmittance at a wavelength of from 410 nm to 450 nm is from 20% to 65%,
(2) a transmittance increases substantially in proportion to a wavelength at a wavelength of from 450 nm to 700 nm
(3) a transmittance at the wavelength of 450 nm is 50% or more,
(4) a transmittance at the wavelength of 700 nm is 95% or more, and
(5) the luminous transmittance is from 70% to 85%.

2. The optical material according to any one of claim 1, wherein an average transmittance in a wavelength band of from 410 nm to 450 nm measured at a thickness of 2 mm is from 35% to 65%.

3. The optical material according to any one of claims 1 or 2, wherein a transmittance at a wavelength of 399 nm or less measured at a thickness of 2 mm is 1% or less.

4. The optical material according to any one of claims 1 to 3, wherein an average transmittance in a wavelength band of from 680 nm to 800 nm measured at a thickness of 2 mm is 90% or more.

5. The optical material according to any one of claims 1 to 3, wherein a transmittance at a wavelength of from 680 nm to 800 nm measured at a thickness of 2 mm is 90% or more.

6. The optical material according to any one of claims 1 to 5, wherein an average transmittance in a wavelength band of from 450 nm to 700 nm measured at a thickness of 2 mm is from 70% to 85%.

7. The optical material according to any one of claims 1 to 6, wherein the optical material is colored by at least one dye.

8. The optical material according to any one of claims 1 to 7, wherein the optical material contains a resin formed of:
a constituent component derived from an isocyanate compound (A); and
a constituent component derived from at least one active hydrogen compound (B) selected from the group consisting of a polythiol compound having two or more mercapto groups, a hydroxythiol compound having one or more mercapto groups and one or more hydroxyl groups, a polyol compound having two or more hydroxyl groups, and an amine compound.

9. The optical material according to claim 8, wherein the isocyanate compound (A) includes at least one selected from an aliphatic isocyanate compound, an alicyclic isocyanate compound, an aromatic isocyanate compound, a heterocyclic isocyanate compound, or an aromatic aliphatic isocyanate compound.

10. The optical material according to claim 8, wherein the isocyanate compound (A) is at least one selected from the group consisting of xylene diisocyanate, phenylene diisocyanate, tolylene diisocyanate, diphenylmethane diisocyanate, 2,5-bis(isocyanatomethyl)bicyclo-[2.2.1]-heptane, 2,6-bis(isocyanatomethyl)bicyclo-[2.2.1]-heptane, hexamethylene diisocyanate, pentamethylene diisocyanate, bis(isocyanatomethyl)cyclohexane, and dicyclohexylmethane diisocyanate.

11. The optical material according to claim 10, wherein the polythiol compound is at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

## Patentansprüche

1. Optisches Material, bei dem eine Durchlässigkeitskurve die folgenden Kenndaten (1) bis (4) aufweist und der Lichtdurchlässigkeitsgrad die folgenden Kenndaten (5) aufweist, wobei die Durchlässigkeitskurve und der Lichtdurchlässigkeitsgrad bei einer Dicke von 2 mm gemessen werden:
(1) die maximale Durchlässigkeit bei einer Wellenlänge von 410 nm bis 450 nm beträgt 20 % bis 65 %,
(2) die Durchlässigkeit nimmt bei einer Wellenlänge von 450 nm bis 700 nm im Wesentlichen proportional zur Wellenlänge zu,
(3) die Durchlässigkeit bei der Wellenlänge von 450 nm beträgt 50 % oder mehr;
(4) die Durchlässigkeit bei der Wellenlänge von 700 nm beträgt 95 % oder mehr und
(5) die Lichtdurchlässigkeit beträgt 70 % bis 85 %.

2. Optisches Material nach Anspruch 1, wobei die mittlere Durchlässigkeit in einem Wellenlängenband von 410 nm bis 450 nm, die bei einer Dicke von 2 mm gemessen wird, 35 % bis 65 % beträgt.

3. Optisches Material nach einem der Ansprüche 1 oder 2, wobei die Durchlässigkeit bei einer Wellenlänge von 399 nm oder weniger, die bei einer Dicke von 2 mm gemessen wird, 1 % oder weniger beträgt.

4. Optisches Material nach einem der Ansprüche 1 bis 3, wobei die mittlere Durchlässigkeit in einem Wellenlängenband von 680 nm bis 800 nm, die bei einer Dicke von 2 mm gemessen wird, 90 % oder mehr beträgt.

5. Optisches Material nach einem der Ansprüche 1 bis 3, wobei die Durchlässigkeit bei einer Wellenlänge von 680 nm bis 800 nm, die bei einer Dicke von 2 mm gemessen wird, 90 % oder mehr beträgt.

6. Optisches Material nach einem der Ansprüche 1 bis 5, wobei die mittlere Durchlässigkeit in einem Wellenlängenband von 450 nm bis 700 nm, die bei einer Dicke von 2 mm gemessen wird, 70 % bis 85 % beträgt.

7. Optisches Material nach einem der Ansprüche 1 bis 6, wobei das optische Material mit zumindest einem Färbemittel gefärbt ist.

8. Optisches Material nach einem der Ansprüche 1 bis 7, wobei das optische Material ein Harz enthält, das aus Folgendem gebildet ist:
eine konstitutive Komponente, die von einer Isocyanat-Verbindung (A) abgeleitet ist; und
eine konstitutive Komponente, die von zumindest einer Verbindung mit aktivem Wasserstoff (B) abgeleitet ist, die aus der aus einer Polythiol-Verbindung, die zwei oder mehrere Mercaptogruppen aufweist, einer Hydroxythiol-Verbindung, die eine oder mehrere Mercaptogruppen und eine oder mehrere Hydroxylgruppen aufweist, einer Polyol-Verbindung, die zwei oder mehrere Hydroxylgruppen und eine Amino-Verbindung aufweist, bestehenden Gruppe ausgewählt ist.

9. Optisches Material nach Anspruch 8, wobei die Isocyanat-Verbindung (A) zumindest eine, ausgewählt aus einer aliphatischen Isocyanat-Verbindung, einer alizyklischen Isocyanat-Verbindung, einer aromatischen Isocyanat-Verbindung, einer heterozyklischen Isocyanat-Verbindung und einer aromatisch-aliphatischen Isocyanat-Verbindung umfasst.

10. Optisches Material nach Anspruch 8, wobei die Isocyanat-Verbindung (A) zumindest eine, ausgewählt aus der aus Xyloldiisocyanat, Phenylendiisocyanat, Tolylendiisocyanat, Diphenylmethandiisocyanat, 2,5-Bis(isocyanatomethyl)bicyclo-[2.2.1]-heptan, 2,6-Bis(isocyanatomethyl)bicyclo-[2.2.1]-heptan, Hexamethylendiisocyanat, Pentamethylendiisocyanat, Bis(isocyanatomethyl)cyclohexan und Dicyclohexylmethandiisocyanat bestehenden Gruppe ist.

11. Optisches Material nach Anspruch 10, wobei die Polythiol-Verbindung zumindest eine, ausgewählt aus der aus 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, 4-Mercaptomethyl-1,8-dimercapto-3,6-dithiaoctan, Pentaerythrit-tetrakis(2-mercaptoacetat), Pentaerythrit-tetrakis(3-mercaptopropionat), 2,5-Bis(mercaptomethyl)-1,4-dithian, Bis(mercaptoethyl)sulfid, 1,1,3,3-Tetrakis(mercaptomethylthio)-propan, 4,6-Bis(mercaptomethylthio)-1,3-dithian, 2-(2,2-Bis(mercaptomethylthio)ethyl)-1,3-dithietan, 1,1,2,2-Tetrakis(mercaptomethylthio)ethan, 3-Mercaptomethyl-1,5-dimercapto-2,4-dithiapentan, Tris(mercaptomethylthio)methan und Ethylenglykol-bis(3-mercaptopropionat) bestehenden Gruppe ist.

## Revendications

1. Matériau optique dans lequel une courbe de transmittance satisfait aux caractéristiques (1) à (4) suivantes et une transmittance lumineuse satisfait à la caractéristique (5) suivante, la courbe de transmittance et la transmittance lumineuse étant mesurées à une épaisseur de 2 mm :
(1) une transmittance maximale à une longueur d'onde de 410 nm à 450 nm est de 20 % à 65 %,
(2) une transmittance augmente sensiblement proportionnellement à une longueur d'onde à une longueur d'onde de 450 nm à 700 nm,
(3) une transmittance à la longueur d'onde de 450 nm est de 50 % ou plus,
(4) une transmittance à la longueur d'onde de 700 nm est de 95 % ou plus, et
(5) la transmittance lumineuse est de 70 % à 85 %.

2. Matériau optique selon l'une quelconque des revendications 1, dans lequel une transmittance moyenne dans une bande de longueur d'onde de 410 nm à 450 nm, mesurée à une épaisseur de 2 mm, est de 35 % à 65 %.

3. Matériau optique selon l'une quelconque des revendications 1 ou 2, dans lequel une transmittance à une longueur d'onde de 399 nm ou moins, mesurée à une épaisseur de 2 mm, est de 1 % ou moins.

4. Matériau optique selon l'une quelconque des revendications 1 à 3, dans lequel une transmittance moyenne dans une bande de longueur d'onde de 680 nm à 800 nm, mesurée à une épaisseur de 2 mm, est de 90 % ou plus.

5. Matériau optique selon l'une quelconque des revendications 1 à 3, dans lequel une transmittance à une longueur d'onde de 680 nm à 800 nm, mesurée à une épaisseur de 2 mm, est de 90 % ou plus.

6. Matériau optique selon l'une quelconque des revendications 1 à 5, dans lequel une transmittance moyenne dans une bande de longueur d'onde de 450 nm à 700 nm, mesurée à une épaisseur de 2 mm, est de 70 % à 85 %.

7. Matériau optique selon l'une quelconque des revendications 1 à 6, dans lequel le matériau optique est coloré par l'intermédiaire d'au moins un colorant.

8. Matériau optique selon l'une quelconque des revendications 1 à 7, dans matériau optique contient une résine formée :
d'un composant constitutif dérivé d'un composé d'isocyanate (A) ; et
d'un composant constitutif dérivé d'au moins un composé d'hydrogène actif (B) choisi dans le groupe constitué d'un composé de polythiol présentant deux groupes mercapto ou plus, d'un composé d'hydroxythiol présentant un ou plusieurs groupes mercapto et un ou plusieurs groupes hydroxyle, d'un composé de polyol présentant deux groupes hydroxyle ou plus, et d'un composé d'amine.

9. Matériau optique selon la revendication 8, dans lequel le composé d'isocyanate (A) inclut au moins un choisi parmi un composé d'isocyanate aliphatique, un composé d'isocyanate alicyclique, un composé d'isocyanate aromatique, un composé d'isocyanate hétérocyclique ou un composé d'isocyanate aliphatique aromatique.

10. Matériau optique selon la revendication 8, dans lequel le composé d'isocyanate (A) est au moins un choisi dans le groupe constitué par le diisocyanate de xylène, le diisocyanate de phénylène, le diisocyanate de tolylène, le diisocyanate de diphénylméthane, le 2,5-bis(isocyanatométhyl)bicyclo-[2.2.1]-heptane, le 2,6-bis(isocyanatométhyl)bicyclo-[2.2.1]-heptane, le diisocyanate d'hexaméthylène, le diisocyanate de pentaméthylène, le bis(isocyanatométhyl)cyclohexane et le diisocyanate de dicyclohexylméthane.

11. Matériau optique selon la revendication 10, dans lequel le composé de polythiol est au moins un composé choisi dans le groupe constitué par le 5,7-dimercaptométhyl-1,11-dimercapto-3,6,9-trithiaundécane, le 4,7-dimercaptométhyl-1,11-dimercapto-3,6,9-trithiaundécane, le 4,8-dimercaptométhyl-1,11-dimercapto-3,6,9-trithiaundécane, le 4-mercaptométhyl-1,8-dimercapto-3,6-dithiaoctane, le tétrakis(2-mercaptoacétate) de pentaérythritol, le tétrakis(3-mercaptopropionate) de pentaérythritol, le 2,5-bis (mercaptométhyl)-1,4-dithiane, le bis (mercaptoéthyl)sulfure, le 1,1,3,3-tétrakis(mercaptométhylthio)propane, le 4,6-bis(mercaptométhylthio)-1,3-dithiane, le 2-(2,2-bis(mercaptométhylthio)éthyl)-1,3-dithiétane, le 1,1,2,2-tétrakis(mercaptométhylthio)éthane, le 3-mercaptométhyl-1,5-dimercapto-2,4-dithiapentane, le tris(mercapto-méthylthio)méthane), et le bis(3-mercaptopropionate) d'éthylène glycol.
